# EUROPÄISCHE PATENTANMELDUNG

(11) **EP 4 260 689 A1**
(43) Veröffentlichungstag der Anmeldung: **18.10.2023**
(21) Anmeldenummer: 23167633.9
(22) Anmeldetag: 12.04.2023
(51) Int. Cl.: A01K 1/03, G06Q 10/087

(54) **SYSTEM FÜR TIERZUCHT- ODER PFLANZENFORSCHUNGSANLAGEN MIT WECHSELSTATION, BEHÄLTERN UND EINEM SATZ AN MARKIEREINRICHTUNGEN DAFÜR**

(30) Priorität: 13.04.2022 DE 102022109147
(71) Anmelder: Galilei Software GmbH, 83646 Bad Tölz (DE)
(72) Erfinder: HAMMELBACHER, Stephan, 83684 Tegernsee (DE)
(74) Vertreter: Beckord & Niedlich Patentanwälte PartG mbB

(57) **Zusammenfassung**

Die Erfindung betrifft ein System für Tierzucht- oder Pflanzenforschungsanlagen, mit einem Regal (16) zur Aufnahme von Behältern (3a, 3b, 3c), mit einer Wechselstation (24), mit einer Arbeitsfläche (10) der Wechselstation (24) zur Bearbeitung von Objekten in zumindest einem Behälter (3a, 3b, 3c) auf der Arbeitsfläche (10), mit einem Lesegerät (17) der Wechselstation (24) für elektronische Behälterkarten (11), mit autoklavierbaren Behältern (3a, 3b, 3c) zur Aufnahme von Objekten, mit von den Behältern (3a, 3b, 3c) abnehmbaren elektronischen Behälterkarten (11) zur Identifikation der Behälter (3a, 3b, 3c) und zur Darstellung des Behälterinhalts direkt am Behälter (3a, 3b, 3c), wobei jeweils ein maschinenlesbares, von der Behälterkarte (11) verschiedenes Behälterkartenetikett (22) an den Behältern (3a, 3b, 3c) zur Identifikation des jeweiligen Behälters (3a, 3b, 3c) und eine von dem Lesegerät (17) verschiedene Leseeinrichtung (7, 8) zum Erfassen der Behälteretiketten (22) vorgesehen sind.

## Beschreibung

Die Erfindung betrifft ein System für Tierzucht- oder Pflanzenforschungsanlagen,
- das autoklavierbare Behälter zur Aufnahme von Objekten,
- ein Regal zur Aufnahme der Behälter,
- eine Wechselstation,
- eine Arbeitsfläche der Wechselstation zur Bearbeitung von Objekten in zumindest einem der Behälter auf der Arbeitsfläche,
- eine Rechnereinheit zum Betreiben einer Managementsoftware für die Objekte,
- von den Behältern abnehmbare elektronische Behälterkarten zur Identifikation der Behälter in einer Managementsoftware und zur Darstellung zumindest des Behälterinhalts direkt am Behälter und
- ein Lesegerät der Wechselstation für die elektronischen Behälterkarten umfasst.

Die Erfindung betrifft außerdem jeweils ein entsprechendes Regal und eine derartige Wechselstation für Tierzucht- oder Pflanzenforschungsanlagen, einen zugehörigen Behälter für das obige System für Tierzucht- oder Pflanzenforschungsanlagen zur Verwendung in einer Wechselstation und einen Satz aus Behältermarkierungseinrichtungen zum Anbringen an dem obigen Behälter und zur Verwendung in einem System für Tierzucht- oder Pflanzenforschungsanlagen.

Ein System für Tierzucht- oder Pflanzenforschungsanlagen samt Managementsoftware zeigt und beschreibt beispielsweise die WO 2011 / 124 209 A1. Darin ist ein Verfahren zur Prozessverfolgung von Vorgängen und/oder Leistungen, die wenigstens ein Objekt betreffen, beschrieben, bei dem ein Lesegerät Daten eines dem Objekt oder seinem Behälter zugeordneten Behälterkartens erfasst, wobei die Daten das Objekt bzw. dessen Eigenschaften beschreiben. Nach dem Identifizieren des Objekts durch Erfassen der Daten des Behälterkartens durch das Lesegerät folgt ein Erfassen eines Vorgangs bzw. einer Leistung und/oder der dadurch gewonnenen, geänderten oder ggf. auch unveränderten Daten des Objekts bzw. seiner Eigenschaften. Ferner wird eine Vorrichtung und ein Computersystem zur Durchführung des Verfahrens sowie ein Computerprogrammprodukt zur programmtechnischen Einrichtung eines derartigen Computersystems und eine entsprechende Wechselstation dafür beschrieben.

Die WO 2014 / 053 436 A1 betrifft eine vergleichbare Vorrichtung, insbesondere für eine Tierraumeinrichtung oder eine Pflanzenlaboreinrichtung mit einem Regal, mit Behältern, die Untersuchungsobjekte enthalten, mit einer Vorrichtung zum Erfassen der Behälter im Regal und mit einer Recheneinheit zum Speichern und Verarbeiten von Daten. Die Organisation eines oder mehrerer Objekte kann eine Prozessverfolgung von Vorgängen und/oder Leistungen, die wenigstens ein Objekt betreffen, und/oder die Feststellung der Präsenz eines Objektes betreffen, wobei auch der Behälter selbst das Objekt sein kann. Die Organisation des Objekts kann demzufolge mittelbar über die Organisation seines Behälters geschehen. Mit dem Erfassen der Behälter wird ihre Anwesenheit oder Abwesenheit im Regal erfasst, bzw. ihre Anwesenheit an einer bestimmten Position erfasst

Der EP 2 627 169 B1 sind erste und zweite Kennungen an einem Käfig zur Einschließung von Nagetieren zu entnehmen, die beim Einschieben des Käfigs in ein Schienensystem eines Regals jeweils von einem ersten und einem zweiten Detektor durch einen Deckel des Käfigs hindurch erfasst werden.

Die EP 2 950 637 B1 schlägt die Anbringung von RFiD-Chips in Behälterdeckeln von Tiergehäusekäfigen vor, um sie in einem Regal für die Aufnahme einer Vielzahl an Tiergehäusekäfigen auf kurze Distanz lesen zu können.

Aufgabe der Erfindung ist es, das Bearbeiten von Behälterinhalten in Tierzucht- oder Pflanzenforschungsanlagen weniger fehleranfällig zu gestalten. Dabei sollen auch ergonomische Belange des in der Zucht- oder Forschungsanlage arbeitenden Personals noch stärker berücksichtigt werden.

Diese Aufgabe wird bei dem obigen System für Tierzucht- oder Pflanzenforschungsanlagen dadurch gelöst, dass es jeweils ein maschinenlesbares, von der Behälterkarte verschiedenes und nicht-autoklavierbares Behälterkartenetikett an den Behältern zur Identifikation (zumindest) der jeweiligen Behälterkarte und damit des Behälters und eine entsprechende, von dem Lesegerät verschiedene Leseeinrichtung zum Erfassen der Behälterkartenetiketten umfasst.

Die autoklavierbaren Behälter dienen der Aufnahme eines Objekts, das in der jeweiligen Tierzucht- oder Pflanzenforschungsanlage untersucht und mit dem dort gearbeitet wird. Der Behälter besteht regelmäßig aus einem Behälterunterteil bzw. einer Behälterschale und einem abnehmbaren Behälterdeckel. Das Objekt, das in der Behälterschale aufgenommen ist, kann ein oder mehrere Individuen umfassen, also beispielsweise ein oder mehrere Tiere, Pflanzen, Keimlinge oder Bakterienkulturen. Um das Untersuchungsergebnis nicht durch Verschmutzungen zu verfälschen und möglichst sterile Bedingungen zu ermöglichen, werden die Behälter nach jeder bzw. vor einer erneuten Benutzung autoklaviert.

Das Regal oder Rack dient der platzsparenden Aufnahme der Behälter, solange sie nicht bearbeitet werden. Es kann darüber hinaus Funktionen der Ver- und/oder Entsorgung des Behälterinhalts übernehmen.

Die Wechselstation bzw. die medizinische oder mikrobiologische Sicherheitswerkbank kann mit einer Anlage zum Erzeugen eines sog. Laminar-Flows ausgestattet sein. Als mikrobiologische Sicherheitswerkbank der Klasse II verfügt sie über einen durch Luftvorhänge vom übrigen Raum abgeschirmten Hygienebereich, damit die Organismen beim Öffnen der Behälter nicht mit der Raumluft in Berührung kommen. Andererseits erlaubt der Luftvorhang als Barriere ein ungehindertes Arbeiten mit den Behältern und Organismen. Als mikrobiologische Sicherheitswerkbank der Klasse III ist sie vollständig geschlossen und verfügt über fest eingebaute Handschuhe und Schleusen, durch die Werkzeuge und Arbeitsmaterial eingebracht werden.

Die Managementsoftware für die Objekte dient ihrer Erfassung sowie der Erfassung von Tätigkeiten an den Objekten, von Prozessen der Objekte sowie der Erfassung der jeweiligen Ergebnisse, insbesondere von Veränderungen der untersuchten Objekte und dem Zurverfügungstellen der jeweiligen Daten. Die Managementsoftware befindet sich auf einer Rechnereinheit des Systems. Sie enthält Datensätze, die die Objekte, Untersuchungsabläufe, (Zwischen-) Ergebnisse, Daten des beteiligten Personals etc. und die zugehörigen Behälter betreffen. Die Datensätze befinden sich zumindest teilweise auch auf den weiter unten beschriebenen Behälterkarten.

Die Rechnereinheit kommuniziert mit dem Lesegerät der Wechselstation, das die elektronischen Behälterkarten ausliest, sobald eine Behälterkarte vom Behälter abgenommen und in den Lesebereich des Lesegeräts gebracht oder das mobile Lesegerät auf die Behälterkarte gerichtet wird. Je nach Ausstattung der Behälterkarte kann das Lesegerät Daten der Behälterkarte nicht nur unidirektional erfassen, zum Beispiel als Scanner lesen, sondern auch senden und damit bidirektional wirken. Der Einfachheit halber ist im Folgenden dennoch nur von Lesegerät die Rede, auch wenn es bidirektional wirkt, zum Beispiel zusammen mit einem RFID-Transponder.

Die elektronische Behälterkarte ist vom Behälter abnehmbar, weil sie Elektronik u.a. zum Darstellen, Senden und Empfangen von Daten enthält, die ein Autoklavieren ggf. zusammen mit den Behältern nicht übersteht. Die Behälterkarte identifiziert nicht nur den Behälter, an dem sie angebracht ist, sondern stellt zumindest einen Teil der Daten des Behälterinhalts direkt am Behälter selbst dar und ermöglicht damit eine schnelle Orientierung des Personals der Zucht- oder Forschungsanlage.

Erfindungsgemäß umfasst das System einerseits jeweils mindestens ein maschinenlesbares, von der Behälterkarte verschiedenes Behälterkartenetikett, das an den Behältern befestigt oder befestigbar ist. Es ist der bekannten Behälterkarte zugeordnet, lässt sich also der zugehörigen Behälterkarte auch bei räumlicher Trennung voneinander separat und unabhängig von der Behälterkarte erfassen und eindeutig zuordnen. Das erfindungsgemäße Behälterkartenetikett kann damit der Identifikation der jeweiligen Behälterkarte und auch unabhängig von ihr der Identifikation des Behälters dienen, an dem die zugehörige Behälterkarte und das Behälterkartenetikett angebracht sind. Das System umfasst andererseits eine mit dem Behälterkartenetikett korrespondierende, von dem bekannten Lesegerät verschiedene Leseeinrichtung zum maschinellen Erfassen von Behälterkartenetiketten. Um zum Beispiel eine höhere Flexibilität bei der Positionierung der Leseeinrichtung zu erhalten, kann ein Behälter auch mehr als nur ein Behälterkartenetikett aufweisen. Auch die Leseeinrichtung kann je nach Ausstattung des Behälterkartenetiketts unidirektional oder bidirektional wirken.

Die Behälterkarte wird maschinell regelmäßig dadurch ausgelesen, dass ein Lesegerät auf die Behälterkarte gerichtet wird oder die Behälterkarte, regelmäßig zusammen mit dem Behälter, im Lesebereich eines Lesegeräts positioniert wird. Das maschinelle Lesen der Behälterkarte erfordert also einen separaten Handhabungsschritt des Personals der Zucht- oder Forschungseinrichtung. Das Behälterkartenetikett dagegen ist dafür gedacht, von der zugehörigen erfindungsgemäßen Leseeinrichtung automatisch erfasst zu werden. Für die maschinelle Erfassung des erfindungsgemäßen Behälterkartenetiketts ist also keine eigene Handlung des Personals erforderlich. Dies erleichtert die Arbeit des Personals ganz erheblich, weil die Erfassung eines Behälters nicht mehr separat und händisch vorgenommen werden muss, sondern vorzugsweise während der üblichen Handhabung der Behälter ohne Störung oder zumindest Unterbrechung des Arbeitsablaufs quasi von selbst erfolgt. Die Erleichterung ist zudem auch darin zu sehen, dass keine Verwechslungen von Behältern mehr geschehen können und keine händischen Zwischennotierungen von Daten oder ortsferne Erfassungen der Behälter unter Inkaufnahme langer Laufwege vorgenommen werden müssen. Schließlich vermeidet die Erfindung eine Kontaminationsbrücke zwischen der Leseeinrichtung und dem Behälter.

Die automatische Erfassung muss einerseits zuverlässig erfolgen und handhabungssicher sein, darf andererseits aber nicht zu Falscherfassungen, zum Beispiel zu Verwechslungen oder Doppelerfassung von Behältern führen. Bei mehreren gleichzeitig anwesenden Behältern muss zuverlässig und ausschließlich der zutreffende Behälter auf der zugehörigen Position in der Wechselstation bzw. im Regal erfasst werden. Insbesondere um Verwechslungen auszuschließen erfasst die Leseeinrichtung das Behälterkartenetikett daher vorzugsweise über nur kurze Distanz. Dafür bieten sich beispielsweise RFiD-Technologie, insbesondere NFC-Technik an oder optische maschinenlesbare Codes.

Die erfindungsgemäße Leseeinrichtung kann vorteilhafter Weise auch hinsichtlich ihrer räumlichen Anordnung in den regulären Arbeitsablauf integriert sein. Nach einer weiteren vorteilhaften Ausgestaltung der Erfindung kann die Leseeinrichtung daher an der Wechselstation und dort vorzugsweise an deren oder im Bereich ihrer Arbeitsfläche angeordnet sein. Denn Manipulationen an den Objekten der Behälter werden regelmäßig an der Wechselstation vorgenommen und Beobachtungen, Auswertungen und Meldungen dort erfasst, vorgenommen und generiert. Mit der Anordnung der Leseeinrichtung im räumlich engen Bezug zur Wechselstation bzw. zu ihrer Arbeitsfläche liegt die Leseeinrichtung buchstäblich am Ort des Geschehens der Zucht- oder Forschungseinrichtung.

Sobald ein Behälter auf der Arbeitsfläche eine Wechselstation abgestellt wird, kann die dortige Leseeinrichtung das Behälterkartenetikett des Behälters erfassen und die Anwesenheit des Behälters in der Wechselstation an die Managementsoftware signalisieren. In vergleichbarer Weise kann die Leseeinrichtung der Managementsoftware signalisieren, dass bzw. sobald der Behälter bzw. das Behälterkartenetikett den Lesebereich der Leseeinrichtung und damit die Arbeitsfläche bzw. die Wechselstation wieder verlassen hat. Dadurch kann softwareseitig beispielsweise dafür gesorgt sein, dass Manipulationen am Datensatz des Behälters nur in der Zwischenzeit, also nur während der Anwesenheit des Behälters in der Wechselstation, vorgenommen werden können. Damit lassen sich versehentliche und fälschliche Änderungen von Datensätzen tatsächlich unbeteiligter bzw. unbearbeiteter Behälter zuverlässig ausschließen.

Alternativ oder zusätzlich kann die erfindungsgemäße Leseeinrichtung am Regal und dort am jeweiligen Stellplatz eines Behälters angeordnet sein. Mit der Erfassung des Behälters im Regal kann eine Handlung am Behälter automatisch als endgültig abgeschlossen signalisiert werden. Außerdem erleichtert eine Erfassung der Behälter im Regal deren Inventur. Realisiert die Leseeinrichtung des Regals eine Entnahme des Behälters, kann er in der Managementsoftware zur Bearbeitung seiner Daten freigegeben werden.

Mit der Anordnung der erfindungsgemäßen Leseeinrichtung sowohl am Regal als auch an der Wechselstation lässt sich jeder Behälter vollständig überwachen, weil er somit an seinen beiden regelmäßigen Aufenthaltsorten nachweisbar ist und sich die Zeit für seinen Aufenthalt dazwischen stark eingrenzen lässt. Sollte zum Beispiel ein Behälter über eine vorher festgelegte Zeitdauer hinaus weder von einer Leseeinrichtung im Regal noch von einer Leseeinrichtung an einer Wechselstation erfasst werden, kann eine Fehler- oder Warnmeldung ausgegeben werden.

Grundsätzlich kann das Behälterkartenetikett an jedem beliebigen Ort am Behälter angebracht sein, solange es die Leseeinrichtung dort zuverlässig erfassen kann. Nach einer weiteren vorteilhaften Ausgestaltung der Erfindung kann das Behälterkartenetikett zum Beispiel am Boden oder zumindest im Bodenbereich des Behälters angeordnet sein. Die mit dem Etikett korrespondierende Leseeinrichtung in der Wechselstation kann dann in oder unter der Arbeitsfläche und/oder im Regal unter der Abstellfläche des Behälters bzw. unter der Bodenfläche des im Regal platzierten Behälters angeordnet sein.

Das Behälterkartenetikett kann alternativ beispielsweise an einer Rückwand des Behälters angebracht sein, so dass es von einer Leseeinrichtung an einer Rückseite des Stellplatzes des Behälters im Regal erfasst werden kann. In der Wechselstation kann die korrespondierende Leseeinrichtung auf der einer Bedienungsseite der Arbeitsfläche gegenüberliegenden Rückseite der Arbeitsfläche angeordnet sein, insbesondere wenn die Wechselstation nur von einer Seite aus bedient wird und die Leseeinrichtung an der Rückseite daher nicht stört. Bei einer Anordnung der Leseeinrichtung an der Rückseite der Arbeitsfläche kann das Behälterkartenetikett auch an einem Deckel des Behälters befestigt sein, der zur Bearbeitung der Objekte abgenommen und währenddessen an der Rückseite der Arbeitsfläche abgestellt wird. Zusammen mit dem Abnehmen und Abstellen des Deckels des Behälters an der Rückseite kann das Behälterkartenetikett in den Lesebereich der Leseeinrichtung gelangen. Im Regal dagegen kann die Leseeinrichtung auf einer Oberseite des Stellplatzes des Behälters angebracht sein, um von dort aus das Behälterkartenetikett am Deckel des Behälters zu erfassen.

Bei einer alternativen Anordnung des Behälterkartenetiketts an einer Seitenwand des Behälters kann die Leseeinrichtung des Regals bzw. der Wechselstation ebenfalls in einem seitlichen Bereich des Behälterplatzes bzw. der Arbeitsfläche angeordnet werden. Am Behälterplatz im Regal kann dann die Leseeinrichtung an der entsprechenden Seite angeordnet sein. Da auf oder an der Arbeitsfläche in der Wechselstation entsprechende Lesegeräte ebenfalls seitlich, also rechtsseitig und/oder linksseitig angeordnet werden, kann es aus Gründen eines unbehinderten Arbeitsablaufs erforderlich sein, je Behälter zwei Behälterkatenetiketten anzuordnen, nämlich ebenfalls rechtsseitig und linksseitig. Damit kann es unerheblich sein, ob der Behälter auf der Arbeitsfläche rechts oder links abgestellt wird.

Das erfindungsgemäße Behälterkartenetikett ist der bekannten Behälterkarte zugeordnet, lässt sich also der zugehörigen Behälterkarte auch bei räumlicher Trennung voneinander eindeutig zuordnen. Eine Zuordnung kann zum Beispiel über eine farbliche Markierung erfolgen. Nach einer vorteilhaften Ausgestaltung der Erfindung können die Behälterkarte einerseits und das Behälterkartenetikett desselben Behälters andererseits gleichlautende Identifikationskennzeichen, insbesondere gleichlautende Identifikationsnummern aufweisen. Die Identifikationskennzeichen lassen sich maschinell erfassen, unidirektional zum Beispiel optisch als QR-Code und/oder bidirektional zum Beispiel elektronisch als RFID-Code. Der RFID-Transponder kann sich beschreiben lassen. Er ermöglicht es, z.B. Warnsignale während der Bearbeitung auf der Wechselstation auf den RFID-Transponder zu schreiben. Wenn der Behälter dann beim nächsten Mal in der Wechselstation geöffnet wird, kann eine Warnnachricht an einem Bildschirm der Wechselstation erscheinen oder ein Warnton ertönen.

Die gegenseitige Zuordnung von Behälterkarte und Behälterkartenetikett lässt sich dadurch maschinell herstellen. Der erfindungsgemäß ausgestatte Behälter lässt sich folglich sowohl über die Behälterkarte als auch über das Behälterkartenetikett fehlerfrei identifizieren. Sollte das zusammengehörige Paar aus Behälterkarte und Behälterkartenetikett ungewollt voneinander getrennt werden, kann die zugehörige Behälterkarte zum Beispiel durch Scannen des QR-Codes auf dem Behälterkartenetikett und durch "Anflashen" einer LED in der Behälterkarte ermittelt werden.

Trägt das Behälterkartenetikett ausschließlich einen optisch erfassbaren Code, enthält es keine eigene Elektronik und kann deshalb autoklavierbar ausgestattet sein. Die Behälterkarte aber ist aufgrund ihrer Elektronik jedenfalls nicht autoklavierbar. Nach einer vorteilhaften Ausgestaltung der Erfindung kann das Behälterkartenetikett insbesondere vom Behälter zerstörungsfrei abnehmbar und wiederverwendbar ausgebildet sein. Sobald also die Behälterkarte vom zugehörigen Behälter abgenommen werden muss, beispielsweise, weil der Behälter nicht mehr benutzt, sondern autoklaviert wird, kann auch das Behälterkartenetikett vom Behälter gelöst und bis zur nächsten Verwendung für einen neuen Behälter an ihrer zugehörigen Behälterkarte beispielsweise angeheftet werden. Damit braucht die Paarung einander zugeordneter Behälterkarten und Behälterkartenetikette nicht aufgelöst zu werden. Um zerstörungsfrei abnehmbar und wiederverwendbar zu sein kann das Behälterkartenetikett montageseitig zum Beispiel über eine Microsuction-Folie bzw. Mikrosaugnapf-Folie verfügen, mittels der sie am Behälter oder auch an der Behälterkarte anbringbar und davon abnehmbar sein kann. Da das Behälterkartenetikett abnehmbar ist und damit nicht zusammen mit dem Behälter autoklaviert wird, kann es ggf. auch eine eigene Elektronik enthalten.

Die eingangs genannte Aufgabe wird auch mit dem obigen Regal für ein System für Tierzucht- oder Pflanzenforschungsanlagen gelöst. Das Regal dient zur Aufnahme von Behältern, die regelmäßig mit einer elektronischen Behälterkarte zur Identifikation und Darstellung zumindest des Behälterinhalts ausgestattet sind. Erfindungsgemäß ist das Regal mit einer Leseeinrichtung zum Erfassen von behälterseitigen Behälterkartenetiketten ausgestattet, die von den Behälterkarten verschieden sind. Je Stellplatz für einen Behälter im Regal ist ein Lesegerät angeordnet, das auf kurze Distanz das Behälterkartenetikett eines auf dem Stellplatz abgestellten Behälters erfasst. Mit der Erfassung des Behälters im Regal kann eine entsprechende Signalisierung an die Managementsoftware des Systems über die Anwesenheit des Behälters im Regal und ggf. dessen Position im Regal verknüpft sein. Alternativ oder zusätzlich kann eine vorangegangene Handlung am Behälter automatisch als endgültig abgeschlossen signalisiert werden. Umgekehrt kann die Leseeinrichtung nach Entnahme eines Behälters einen freien Stellplatz melden und ggf. zusätzlich den entnommenen Behälter als in Bearbeitung angeben. Außerdem ermöglicht eine Erfassung der Behälter im Regal deren schnelle und jederzeitige Inventur.

Am Stellplatz eines Behälters innerhalb des Regals kann die erfindungsgemäße Leseeinrichtung an nahezu jeder Position angebracht sein, an der sie eine Wandung des Behälters bzw. das daran angebrachte Behälterkartenetikett auf kurze Distanz erfassen kann.

Denn das Behälterkartenetikett kann für den Zweck seiner Erfassung im Regal an jeder beliebigen Wandung des Behälters angebracht sein, beispielsweise am Boden, an einer Längsseite, an einer Rückseite oder an seinem Deckel. Selbst mit einer Behälterkarte an der Frontseite dürfte sich die Anbringung des Behälterkartenetiketts ebenfalls an der Frontseite des Behälters, von der aus er ergriffen wird, um ihn dem Regal zu entnehmen, nicht zwingend erübrigen. Erst recht aber mit anderweitigen Behälterkennzeichnungen, die mit oder ohne Behälterkarte an der Frontseite auskommen, kann sich auch die Frontseite zur Anbringung des Behälterkartenetiketts anbieten. Zum Beispiel lassen sich mit wiederverwendbaren, farbigen Behälterkartenetiketten mit oder ohne QR-Code Käfigzustände signalisieren, beispielweise "Tier krank", "Behälter überfüllt". In Kombination mit einem integrierten RFID-Chip lassen sich sogar externe Datenquellen referenzieren wie z.B. Protokolle, SoPs (Standard Operation Procedure), Telefonnummern oder E-Mail-Adressen eines zuständigen Tierschutzbeauftragten, oder die Tiernummer eines kranken Tiers im Behälter. Selbst für den Fall, dass auf eine Behälterkarte, sei sie auf herkömmlichem Papier oder elektronischem Papier, vollständig verzichtet wird, kann das wiederverwendbare Behälterkartenetikett eine elektronische Erkennungsmöglichkeit des Behälters in Verbindung mit einer Leseeinrichtung und einer Rechnereinheit bieten.

Die eingangs genannte Aufgabe wird auch mit der obigen Wechselstation für ein System für Tierzucht- oder Pflanzenforschungsanlagen gelöst. Die Wechselstation dient zur Bearbeitung von Objekten in Behältern, die mit einer an sich bekannten elektronischen Behälterkarte ausgestattet sind. Die Wechselstation verfügt über eine Arbeitsfläche zum Abstellen der Behälter und über ein Lesegerät für die elektronischen Behälterkarten. Erfindungsgemäß verfügt sie außerdem über eine von dem Lesegerät verschiedene Leseeinrichtung in der Wechselstation zum Erfassen von behälterseitigen Behälterkartenetiketten, die von den Behälterkarten verschieden sind.

Die Leseeinrichtung in der Wechselstation erfasst und gelesen ein Behälterkartenetikett automatisch, sobald der Behälter auf der Arbeitsfläche der Wechselstation abgestellt wird. Die Leseeinrichtung identifiziert also den Behälter anhand des Behälterkartenetiketts, womit über die Verknüpfung des Behälterkartenetiketts mit der Behälterkarte auch der Inhalt des Behälters bekannt ist. Der identifizierte Behälter kann damit ohne weiteres Zutun des Personals in der Managementsoftware als in der Wechselstation befindlich registriert und zur Bearbeitung bzw. Veränderung seiner Daten freigegeben werden. Sobald der Behälter der Wechselstation entnommen wird, kann auch dies die Leseeinrichtung registrieren und der Managementsoftware signalisieren, woraufhin die Managementsoftware den Behälter zum Beispiel für eine weitere Manipulation der Daten in der Managementsoftware sperren kann.

Die erfindungsgemäße Leseeinrichtung dient der automatischen Erfassung der Behälterkartenetiketten über eine kurze Distanz. Die Erfassung erfolgt also für das Bedienpersonal der Wechselstation weitgehend unbemerkt während der Handhabung der Behälter. Die Leseeinrichtung ist daher vorzugsweise im Bereich der Arbeitsfläche der Wechselstation dort untergebracht, wo die Behälter bei ihrer Bearbeitung der Objekte ohnehin stehen beziehungsweise abgestellt werden. Die Leseeinrichtung kann daher vorzugsweise unter oder in der Arbeitsfläche in der Wechselstation angeordnet sein, um von dort aus über eine kurze Distanz hinweg ein Behälterkartenetikett vorzugsweise im Bodenbereich oder am Boden eines Behälters zu erfassen.

Für die Anbringung einer erfindungsgemäßen Leseeinrichtung ist die Ausgestaltung der Wechselstation an sich weitgehend unerheblich: In einem einfachen Fall kann sie als offene und fahrbare Einrichtung oder als stationärer Arbeitstisch ausgebildet sein. Für sensiblere Untersuchungen kann sie als Laminar-Flow-Station oder als vollkommen geschlossene Wechselstation mit Klimatisierung und Handschuhkasten, also als Isolator, ausgebildet sein.

Veränderungen der Objekte werden auf der Arbeitsfläche der Wechselstation festgestellt. Bislang erfolgt die softwareseitige Erfassung der Veränderungen der Objekte in der Regel nicht direkt in oder bei der Wechselstation, sondern meist an anderen mehr oder weniger weit entfernten Orten z.B. an entfernt aufgestellten Computern. Dadurch kann es zu Doppelerfassungen, langen Laufwegen und Übertragungsfehlern kommen. Diese Fehlerquelle bei der Generierung und Erfassung medizinischer Daten kann zu Korrekturen führen, die - wenn überhaupt - zu einem späteren Zeitpunkt einen extremen Aufwand verursachen. Nach einer weiteren vorteilhaften Ausgestaltung der Erfindung kann die Wechselstation daher über ein Eingabemedium im Bereich der Arbeitsfläche verfügen, mit dem die Daten des Datensatzes des Behälters bzw. insbesondere seines Inhalts geändert werden können. Das Eingabemedium, vorzugsweise eine Tastatur, kann sich dazu von der Arbeitsfläche aus betätigen lassen, ohne einen Ortswechsel des Personals zu erzwingen. Es kann vorzugsweise in der Arbeitsfläche selbst integriert sein. Damit liegt es ergonomisch günstig im Gesichtsfeld und in Armreichweite des an der Wechselstation tätigen Personals, ohne die Arbeit auf der Arbeitsfläche zu behindern. Das in der Arbeitsfläche integrierte Eingabemedium kann sogar eine intuitive Bedienung ohne zwingenden Sichtkontakt ermöglichen, womit das Personal die Objekte im Blick behalten kann. Um auch höchsten hygienischen Anforderungen zu genügen, kann als Eingabemedium eine Tastatur in der Arbeitsfläche eingelassen sein, deren Tasten keimdicht mit einer Folie abgedeckt sind. In die Arbeitsfläche bündig eingelassen behindert das Eingabemedium die Manipulation der Behälter nicht.

Das Eingabemedium kann vorzugsweise mit einem weitgehend beliebigen Datensichtgerät kombiniert sein, auf dem die zu bearbeitenden Daten und die vorgenommenen Datenänderungen ersichtlich sind. Zur Unterstützung der intuitiven Bedienung des Eingabemediums kann das Datensichtgerät das Eingabemedium funktional wiedergeben, z.B. dessen Tastenanordnung und -belegung. Aus ergonomischen Gründen kann das Datensichtgerät über den auf der Arbeitsfläche abgestellten Behältern und in Kopfhöhe des Personals angeordnet sein.

Das Datensichtgerät kann als ein herkömmlicher Monitor bzw. Bildschirm ausgebildet sein. In einer aufwändigeren Variante kann als Datensichtgerät ein Tablet-Computer in einer geeigneten Halterung dienen, der ggf. zusätzlich als mobiles Gerät aus der Wechselstation entnommen und für weitere Tätigkeiten verwendet werden kann, z.B. für eine wiederkehrende Behälterkontrolle o.ä.

Die eingangs genannte Aufgabe wird auch mit dem obigen Behälter für das obige System für Tierzucht- oder Pflanzenforschungsanlagen bzw. für das obige Regal bzw. für die obige Wechselstation gelöst. Der Behälter ist autoklavierbar und mit einer abnehmbaren elektronischen Behälterkarte ausgestattet. Erfindungsgemäß verfügt der Behälter über ein maschinenlesbares, von der Behälterkarte verschiedenes Behälterkartenetikett. Es verfügt über eine Zuordnungsmöglichkeit zur Behälterkarte und dient der Identifikation zumindest des jeweiligen Behälters. Ist das Behälterkartenetikett fest und dauerhaft mit dem Behälter verbunden, ist es autoklavierbar ausgebildet. Das Behälterkartenetikett lässt sich über eine Leseeinrichtung erfassen und auslesen. Es ist daher derart am Behälter angebracht, dass es sich vorzugsweise im Zuge der Manipulation der Behälter auf der Arbeitsfläche der Wechselstation oder beim Zurückstellen oder bei der Entnahme im Regal erfassen lässt. Seine Anbringung am Behälter korrespondiert folglich mit der räumlichen Anordnung der Leseeinrichtung in der Wechselstation und/oder im Regal. Sind Leseeinrichtungen in der Wechselstation und im Regal nicht an einander entsprechenden Orten angebracht, kann ein Behälter auch zwei oder mehr Behälterkartenetiketten aufweisen. Eine bevorzugte Anordnung Behälterkartenetiketts am Behälter liegt insbesondere in dessen Bodenbereich, weil die korrespondierende Leseeinrichtung dann günstigerweise in oder unter der Arbeitsfläche der Wechselstation bzw. unter der Aufstellebene bzw. der Bodenebene des Behälters im Regal angebracht sein kann.

Ein nicht autoklavierbares Behälterkartenetikett kann vom Behälter abnehmbar angebracht sein. Der Behälter oder das Behälterkartenetikett kann daher nach einer weiteren vorteilhaften Ausgestaltung der Erfindung eine Anbringungsvorrichtung zur reversiblen Anbringung des Behälterkartenetiketts am Behälter umfassen. Die Anbringungsvorrichtung kann eine elektrostatische Aufladung und dadurch Anziehung ermöglichen oder begünstigen. Alternativ kann sie auf einer Mikrosauger-Folie beruhen.

Die eingangs genannte Aufgabe wird auch mit dem obigen Satz aus einer Behälterkarte zum Anbringen an einem Behälter und aus einem wiederverwendbaren Behälterkartenetikett zum mehrmaligen Anbringen an einem Behälter zur Identifikation zumindest des zugehörigen Behälters gelöst. Der Satz ist für den Einsatz insbesondere in dem obigen System für Tierzucht- oder Pflanzenforschungsanlagen oder zur Verwendung in dem obigen Regal oder in der obigen Wechselstation oder zur Anbringung an dem obigen Behälter des Systems, des Regals oder der Wechselstation geeignet. Die Behälterkarte und das Behälterkartenetikett sind einander zugeordnet, wozu sie jeweils mit gleichlautenden maschinenlesbaren Identifikationskennzeichen ausgestattet sind. Die Behälterkarte ist in der Managementsoftware mit einem Datensatz verknüpft, der einen Behälterinhalt bzw. ein Objekt und den Behälter repräsentiert, der das Objekt aufnimmt.

Über das Identifikationskennzeichen des Behälterkartenetiketts lässt sich der erfindungsgemäß gekennzeichnete Behälter identifizieren. Weil das Identifikationskennzeichen des Behälterkartenetiketts demjenigen der Behälterkarte entspricht, kann vom Behälterkartenetikett ausgehend jederzeit überprüft werden, ob sich die korrekte Behälterkarte am Behälter befindet, oder es kann sich eine beispielsweise abgefallene Behälterkarte dem korrekten Behälter zuordnen lassen. Selbst ohne Behälterkarte kann vom Behälterkartenetikett und seinem Identifikationskennzeichen ausgehend der jeweilige Datensatz des zugehörigen Behälters identifiziert werden.

Grundsätzlich kann das Behälterkartenetikett autoklavierbar sein und auch dann am Behälter verbleiben, wenn er vor einem neuen Einsatz autoklaviert wird. Jedenfalls dann aber, wenn das Behälterkartenetikett nicht autoklavierbar ist, kann es nach einer weiteren vorteilhaften Ausgestaltung der Erfindung vom Behälter abnehmbar ausgestaltet sein.

Das Behälterkartenetikett kann daher eine Anbringungsvorrichtung zur reversiblen Anbringung des Behälterkartenetiketts am Behälter umfassen. Die Anbringungsvorrichtung kann eine elektrostatische Aufladung und dadurch eine Anziehung ermöglichen oder begünstigen. Alternativ kann sie auf einer Mikrosauger-Folie beruhen.

Das Behälterkartenetikett lässt sich erfindungsgemäß auf kurze Distanz maschinell erfassen, wozu es mit einer Leseeinrichtung im Regal und/oder in der Wechselstation zusammenwirkt. Nach einer weiteren vorteilhaften Ausgestaltung der Erfindung kann das Behälterkartenetikett daher über einen RFID-Chip und/oder über einen QR-Code und/oder über ein vergleichbares maschinenlesbares Identifikationskennzeichen verfügen. Ein Schichtaufbau des Behälterkartenetiketts kann daher eine Mikrosauger-Haftschicht, ein RFID-Etikett, eine Schicht mit einem QR-Code und eine Kaschierfolie umfassen und ggf. zumindest eine Verstärkungsschicht aufweisen, nämlich eine Verstärkungsschicht zwischen der Haftschicht und dem RFID-Etikett und/oder eine Verstärkungsschicht zwischen dem RFID-Etikett und der Schicht mit dem QR-Code.

Die eingangs genannte Aufgabe wird auch durch die Verwendung eines Behälterkartenetiketts mit einem maschinenlesbaren Identifikationskennzeichen in dem oben erläuterten System für Tierzucht- oder Pflanzenforschungsanlagen oder zur Verwendung in dem obigen Regal oder der obigen Wechselstation durch Anbringen an dem obigen Behälter gelöst. Denn es kann dazu eingesetzt werden, über das Identifikationskennzeichen des Behälterkartenetiketts den gekennzeichneten Behälter und dessen Inhalt zu identifizieren. Da sich die Identifikationskennzeichen des Behälterkartenetiketts und der zugehörigen Behälterkarte einander entsprechen, kann das Behälterkartenetikett dazu genutzt werden, mit seiner Hilfe jederzeit zu überprüfen, ob sich die korrekte Behälterkarte am Behälter befindet. Es ermöglicht also eine automatische Verprobung der elektronischen Behälterkarte am Behälterdeckel mit dem Behälterunterteil, in dem sich das Objekt befindet, sogar in Echtzeit. Genauso kann es dazu dienen, eine beispielsweise abgefallene Behälterkarte dem korrekten Behälter zuzuordnen. Selbst ohne Behälterkarte lässt sich das Behälterkartenetikett und sein Identifikationskennzeichen dazu nutzen, den jeweiligen Datensatz des zugehörigen Behälters zu identifizieren.

Das Prinzip der Erfindung wird im Folgenden anhand einer Zeichnung beispielshalber noch näher erläutert. In der Zeichnung zeigen:
- Figur 1:: eine erfindungsgemäße Wechselstation und ein erfindungsgemäßes Regal,
- Figuren 2, 3:: die Wechselstation der Fig. 1 in zwei perspektivischen Ansichten,
- Figuren 4, 5:: eine Paarung aus einer Behälterkarte und einem erfindungsgemäßen Behälterkartenetikett,
- Figur 6:: ein erfindungsgemäßes Behälterkartenetikett und
- Figur 7:: eine freigestellte Arbeitsfläche der Wechselstation der Figuren 1 bis 3

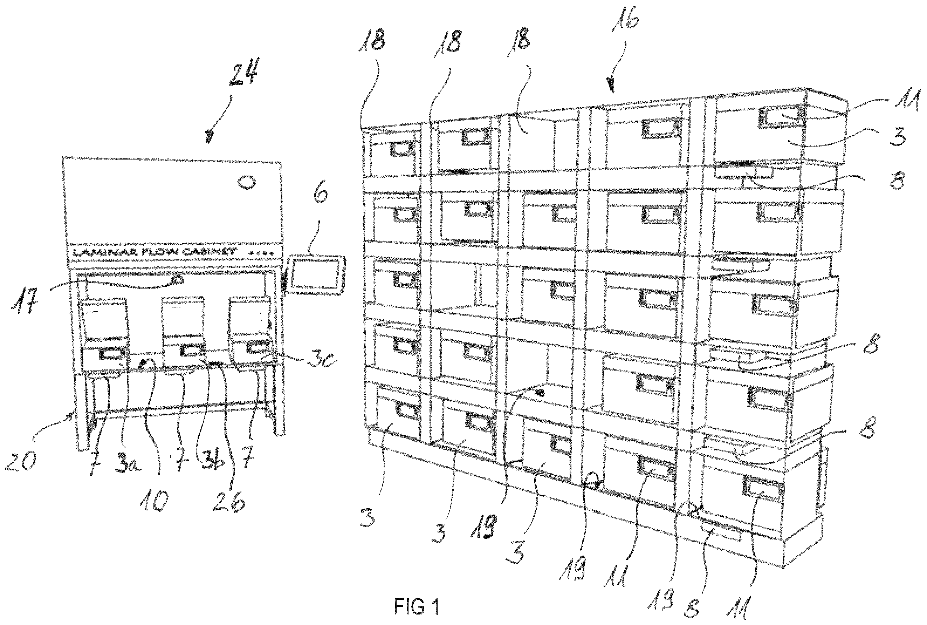

Figur 1 zeigt in stark vereinfachter Form einen Untersuchungsbereich eine Tierzuchtanlage zur Versuchstierhaltung, nämlich ein Regal 16 und eine Wechselstation 24, die jeweils an ein nicht dargestelltes Computersystem angeschlossen sind. Auf das Computersystem hat Personal der Tierzuchtanlage direkten Zugriff.

Das Regal 16 ist eines von vielen weitgehend gleichartigen, denen die Wechselstation 24 zugeordnet ist. Die Tierzuchtanlage beherbergt Tiere als Objekte von Behältern, jene in der Form von Käfigen 3. Die Käfige 3 lagern in Fächern 18 und stehen auf Aufstellflächen 19 des Regals 16, das in der Figur 1 vereinfacht lediglich 25 Fächer 18 umfasst.

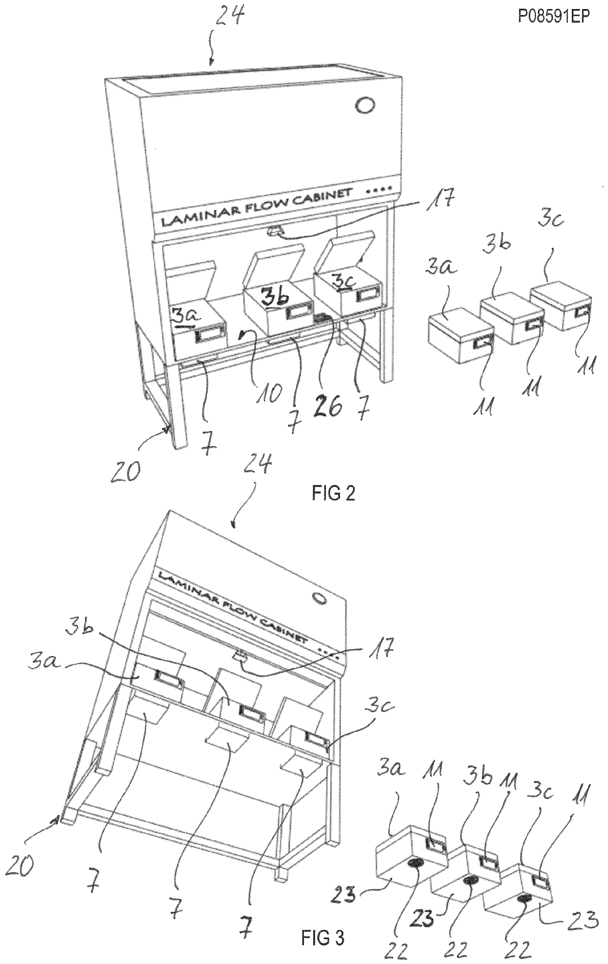

Die Wechselstation 24, auch in den Figuren 2 und 3 dargestellt, umfasst einen Tisch 20 mit einer Arbeitsfläche 10. Seitlich an der Wechselstation 24 ist ein Bildschirm 6 als Anzeige und Eingabemedium des Computersystems angebracht (nur Fig. 1). Auf der Arbeitsfläche 10 sind beispielhaft drei geöffnete Käfige 3a, 3b, 3c abgestellt, die aus den leeren Fächern 18 des Regals 16 stammen. Die Figuren 2, 3 zeigen die Käfige 3a, 3b, 3c separat und geschlossen seitlich erneut, um vor allem die Behälterkartenetikette 22 und ihre Positionierung zu verdeutlichen.

Manipulationen der Käfige 3a, 3b, 3c bzw. der Tiere führt das Personal in der Regel auf der Arbeitsfläche 10 durch. Sie umfassen Prozesse der Haltung, Zucht und von Experimenten und können beispielsweise das Verlagern des Tiers F aus dem ersten Käfig 3a in den dritten Käfig 3c, das Untersuchen des Gesundheitszustands oder das Feststellen von Veränderungen von Eigenschaften der Tiere oder medizinische Prozeduren betreffen. Die Käfige 3 können dazu einzeln oder gleichzeitig und mit Bezug zueinander (vgl. Fig. 1 bis 3) oder seriell ohne gegenseitigen Bezug untereinander bearbeitet werden. Das Personal der Tierzuchtanlage macht die Manipulationen und deren Ergebnisse per Computereingabe zu Bestandteilen von Datensätzen einer Datenbank, auf die das Computersystem 2 Zugriff hat oder die es enthält.

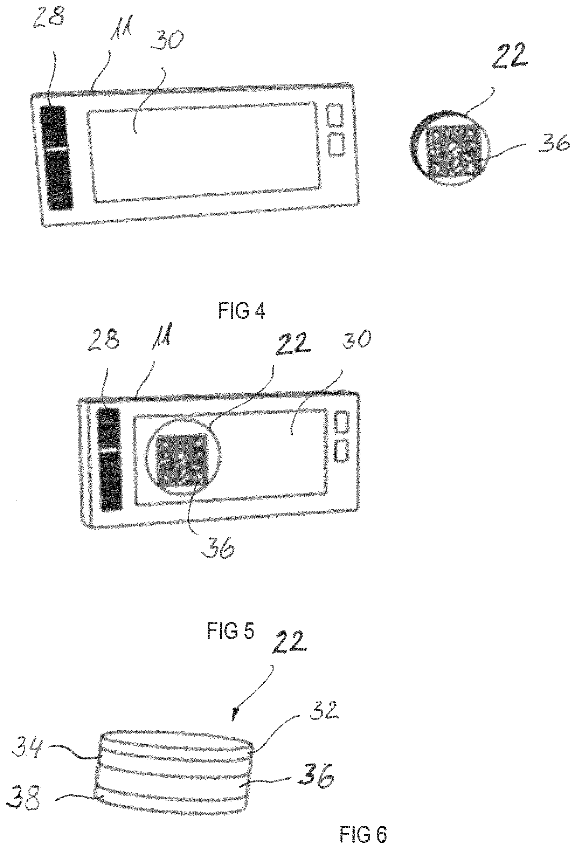

An den Käfigen 3a, 3b, 3c sind an sich bekannte elektronische Behälterkarten 11 abnehmbar angebracht, die in den Figuren 4, 5 separat dargestellt sind. Sie enthalten jeweils eine Sende- und eine Empfangseinrichtung, zum Beispiel RFID-Chipkarten bzw. RFID-Transponder, und tragen zusätzlich einen maschinenlesbaren Strichcode 28 (Fig. 4, 5). Der Code 28 ist der in der Datenbank hinterlegt und ermöglicht eine eindeutige Identifikation jeder Behälterkarte 11.

Auf den Behälterkarten 11 sind Identifikationsdaten der Käfige 3a, 3b, 3c und Daten zu ihrem Inhalt bzw. zu den enthaltenen Objekten abgespeichert und auf einer Anzeige 30 abrufbar. Die Behälterkarten 11 erlauben eine eindeutige Zuordnung der Käfige 3a, 3b, 3c bzw. ihres Inhalts zu den gespeicherten Datensätzen der Datenbank. Die Datensätze charakterisieren den jeweiligen Inhalt der Käfige 3a, 3b, 3c und geben deren Inhalt und Status wieder.

Ein bidirektional wirkendes Lesegerät 17 der Wechselstation 20 (Fig. 1 bis 3) kommuniziert mit den elektronischen Behälterkarten 11 via deren jeweilige Sende- und Empfangseinrichtung, sobald die Behälterkarten 11 in einen Erfassungsbereich des Lesegeräts 17 gebracht werden. Damit lassen sich automatische Aktualisierungen der Anzeigen der Behälterkarten 11 durchführen, sobald die Behälterkarten 11 in die Reichweite des Lesegeräts 17 der Wechselstation 20 gelangen. Die Anzeige 30 der Behälterkarten 11 zeigt damit schnellstmöglich aktuelle Daten an, sobald der zugehörige Datensatz in der Datenbank geändert wurde.

Zusätzlich zu den Behälterkarten 11 tragen die Käfige 3a, 3b, 3c unterseitig erfindungsgemäße Behälterkartenetiketten 22 (Fig. 3 bis 7). Wie Fig. 6 zur Verdeutlichung in der Höhenrichtung stark verzerrt zeigt, setzt sich ein Behälterkartenetikett 22 aus vier scheibenförmigen und flächenidentischen Schichten 32, 34, 36, 38 zusammen: die käfigseitige, in der Fig. 6 obere Schicht ist eine Microsuction-Folie oder Mikrosaugnapf-Folie 32. Die nächste Schicht enthält einen NFC- oder sonstigen RFID-Chip 34, der sich von geeigneten Leseeinrichtungen auf kurze Distanz erfassen lässt. Die darauffolgende Schicht trägt ein maschinenlesbares Identifizierungskennzeichen, nämlich einen QR-Code 36, der durch die letzte Schicht, eine transparente Kaschierfolie 38, abgedeckt ist. Tatsächlich ist das Behälterkartenetikett 22 so flach, dass es selbst unterseitig und außenseitig an einem Boden 23 des Käfigs 3, 3a, 3b, 3c (Fig. 3) angebracht werden kann, ohne dessen Handhabung zu beeinträchtigen.

Die Mikrosaugnapf-Folie 32 ist eine von mehreren Möglichkeiten, das Behälterkartenetikett 22 rückstandsfrei abnehmbar zum Beispiel am Käfig 3a, 3b, 3c zu befestigen. Für Reinigungszwecke der Käfige 3a, 3b, 3c kann das jeweilige Behälterkartenetikett 22 abgenommen werden. Bis zu seinem nächsten Einsatz kann es auf der zugehörigen Behälterkarte 11 angebracht werden (vgl. Fig. 5), dank der Mikrosaugnapf-Folie 32 wiederum rückstandsfrei abnehmbar.

Der QR-Code 36 ist, ggf. zusätzlich zum RFID-Chip, ein maschinenlesbares und individuelles Identifizierungskennzeichen des Behälterkartenetiketts 22. Das am Käfig 3a, 3b, 3c angebrachte Behälterkartenetikett 22 ist also eine körperlich selbstständige und wiederverwendbare Vorrichtung zur Identifikation des Käfigs 3a, 3b, 3c. Sein QR-Code 36 entspricht oder ist identisch mit dem maschinenlesbaren Code 28 der zugehörigen Behälterkarte 11, so dass eine Zuordnung des Behälterkartenetiketts 22 zur zugehörigen Behälterkarte 11 (oder umgekehrt) maschinell, optisch und schnell hergestellt werden kann. Das Behälterkartenetikett 22 und die zugehörige Behälterkarte 11 bilden also ein zusammengehöriges Paar (Fig. 4, 5), das in der Datenbank unter den - funktional identischen - jeweiligen Codes, dem QR-Code 36 bzw. dem Strichcode 28, identifizierbar ist.

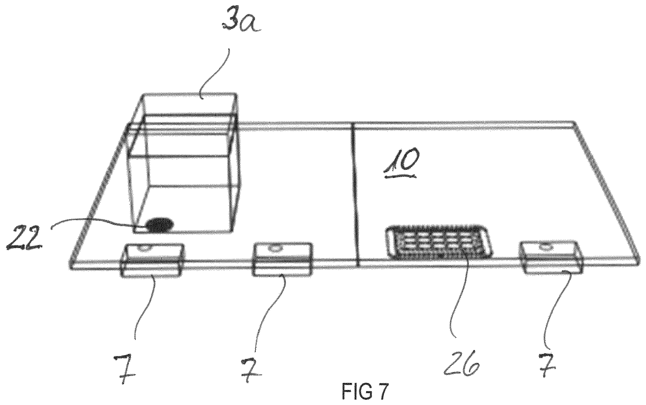

Im Tisch 20 der Wechselstation 24 (Fig. 1 bis 3) sind unter der in Figur 7 separat dargestellten Arbeitsfläche 10 drei bidirektional wirkende Leseeinrichtungen 7 fest eingebaut, die nur einen geringen Erfassungsbereich haben und daher nur auf kurze Distanz NFC- oder andere RFID-Chips erfassen können. Jede Leseeinrichtung 7 ist so angebracht, dass ihr jeweils nur eine Käfigposition oder Käfigstandfläche auf der Arbeitsfläche 10 zugeordnet ist, nämlich eine linke, eine mittlere oder eine rechte Position. Nur den jeweiligen Käfig 3a, 3b, 3c, der auf seiner Unterseite mit einem erfindungsgemäßen Behälterkartenetikett 22 ausgestattet ist und auf der jeweiligen Position steht, kann die jeweilige Leseeinrichtung 7 erfassen. Sie erfasst die Identifikationsdaten des ihr am nächsten liegenden Behälterkartenetiketts 22. Die linke Leseeinrichtung 7 zum Beispiel erfasst nur das Behälterkartenetikett 22 des Käfigs 3a, weil diejenigen der Käfige 3b, 3c nicht mehr in ihrem Erfassungsbereich liegen. Die Verwechslungssicherheit zwischen den Käfigen 3a, 3b, 3c kann durch den Einsatz von NFC-Transpondern in den Behälterkartenetiketten 22 und/oder durch die Verwendung von Niederstrom-Leseeinrichtungen 7 erreicht werden, die eine Leseweite von beispielsweise maximal 4 cm haben.

Auch das Regal 16 ist mit Leseeinrichtungen ausgestattet: jeweils eine Leseeinrichtung 8 ist einem Fach 18 zugeordnet (Fig. 1), in dem sie unter der Aufstellfläche 19 für einen Käfig 3 angebracht ist - in der Figur 1 nur für die äußersten rechten Fächer 18 des Regals 16 dargestellt. Sobald ein Käfig 3 in ein Fach 18 gestellt wird, erfasst die Leseeinrichtung 8 dieses Faches 18 das Behälterkartenetikett 22 des Käfigs 3 und identifiziert damit den Käfig 3. Umgekehrt registriert die Leseeinrichtung 8 die Entnahme des Käfigs 3, sobald das Behälterkartenetikett 22 des Käfigs 3 ihren Erfassungsbereich verlässt.

Die Leseeinrichtungen 7, 8 sind ebenfalls am Computersystem angeschlossen. Im Computersystem ist eine an sich bekannte Tierverwaltungssoftware bzw. ein an sich bekanntes Tier-Management-System gespeichert. Die Software verarbeitet insbesondere die Signale der Leseeinrichtungen 7, 8, zum Beispiel das Erfassen eines Käfigs 3a, 3b, 3c auf der Arbeitsfläche 10 in der Wechselstation 24 oder die Entnahme aus dem Regal 16 oder das Zurückstellen in das Regal 16. Außerdem bietet das Computersystem Zugriff auf die Datensätze, die den jeweiligen Inhalt bzw. die Objekte der Käfige 3a, 3b, 3c betreffen, und kann sie verwalten, insbesondere aufrufen, zuordnen, verändern, aktualisieren und Berechtigten zur Verfügung stellen.

Der Bildschirm 6 ist als berührungssensitiver bzw. Touchscreen-Bildschirm ausgebildet und erlaubt sowohl eine Visualisierung von vorzunehmenden Vorgängen und Leistungen mittels einer graphischen Benutzeroberfläche als auch eine Eingabe von Befehlen und Daten, um durchgeführte Vorgänge, erbrachten Leistungen oder Untersuchungsergebnisse zu erfassen.

Aus ergonomischen Gründen behält das Personal idealerweise sowohl die Tiere als Untersuchungsobjekte als auch den Bildschirm 6 in seinem Gesichtsfeld. Dies erreicht erfindungsgemäß ein Tatasturfeld 26, das als zusätzliches Eingabemedium in die Arbeitsfläche 10 der Wechselstation 24 integriert ist (insbes. Fig. 7), um Eingaben möglichst schnell und blind mit einer Hand machen zu können. Das Tastaturfeld 26 umfasst 15 hintergrundbeleuchtete Tasten, die unter einer Silikonfolie weitgehend in der Ebene der Arbeitsfläche 10 integriert sind, und bietet eine gute haptische Beständigkeit für das Arbeiten mit Handschuhen. Das gleichzeitige Betätigen mehrerer Tasten verhindert ein über die Tasten erhabenes Gitter. Das Tastaturfeld 26 kann blind bedient werden. Für das schnelle Eingewöhnen an eine blinde Bedienung des Tastaturfelds 26 werden die Tastenbelegungen auch am Bildschirm 6 angezeigt. Der Bildschirm 6 und das Tastaturfeld 26 sind damit ergonomisch in Sicht- und Armreichweite an der Wechselstation 24 angeordnet.

Idealerweise befindet sich der Bildschirm 6 - abweichend von Figur 1 - über den Käfigen 3a, 3b, 3c in Kopfhöhe des Personals in der Wechselstation 24. Dazu kann eine nicht dargestellte Werkzeugleiste zwischen Seitenwänden der Wechselstation 24 eingespannt sein, an der der Bildschirm 6 beispielsweise über einen sog. Schwanenhals verstellbar befestigt wird. Die Werkzeugleiste bietet auch Platz für weitere Ausrüstungen wie zum Beispiel einen Scanner zum Lesen von Ohrmarken der Tiere oder anderer Markierungen oder für das Lesegerät 17 oder weitere derartige Lesegeräte.

Die Wechselstation 24 der Figuren 1 bis 3 ist als sog. Laminar-Flow-Station dargestellt. Die Arbeitsfläche 10 befindet sich bei hohen hygienischen Anforderungen daher innerhalb der Laminar-Flow-Wechselstation 24.

In einer kompakten Ausführungsform kann der Tisch 20 als Wagen ausgebildet sein, an dem zusätzlich der Bildschirm 6 angebracht ist. Der Tisch 20 stellt dann eine mobile offene Wechselstation dar.

Das erfindungsgemäße Konzept kann aber auch in Isolatoren eingesetzt werden: Bei höchsten hygienischen Ansprüchen sind das Regal 16, die Arbeitsfläche 10 und ggf. der Bildschirm 6 der Wechselstation 24 in einem Isolator eingebaut, der durch Handschuheingriffe bedient wird. Das Computersystem ist außerhalb des Isolators platziert, da Computertechnologie in Isolatoren nur sehr umständlich eingeführt werden kann und eine Sterilisation des Computersystems innerhalb des Isolators nur schwer möglich ist. Um sie dennoch zu nutzen, können Daten oder sonstige Eingaben der erfindungsgemäß ausgestatten Wechselstation 24 innerhalb des Isolators über den Bildschirm 6 und/oder über ein Tastaturfeld des Isolators, jenes zum Beispiel um einen Arm geschnallt und durch den transparenten Handschuhschaft hindurch bedient, eingegeben werden. Alternativ oder zusätzlich kann eine Spracherkennung zur Steuerung des Computersystems mit Sprachbefehlen vorgesehen sein. Sie erlaubt die Dokumentation der Tätigkeiten in der Wechselstation 24 ohne deren Unterbrechung.

Die Leseeinrichtungen 8 des Regals 16 (Fig. 1) leiten ein Signal an das Computersystem, wonach die Käfige 3a, 3b, 3c aus ihren Fächern 18 entnommen wurden. Sobald die Käfige 3a, 3b, 3c in der Wechselstation 24 angekommen sind, übermitteln die Leseeinrichtungen 7 die Identifikationsdaten auf den Behälterkartenetiketten 22 der Käfige 3a, 3b, 3c zusammen mit ihren jeweiligen Positionen auf der Arbeitsfläche 10 (Fig. 1 bis 3) an das Computersystem. Mit der Erfassung der Entnahme der Käfige 3a, 3b, 3c aus dem Regal 16 und ihrer Registrierung in der Wechselstation 24 findet eine nahezu lückenlose Überwachung der Käfige 3a, 3b, 3c statt, die sogar die jeweilige Zeitspanne zwischen der Entnahme der Käfige 3a, 3b, 3c aus dem Regal 16 und ihrer Ankunft auf der Arbeitsfläche 10 erfasst. Verwechslungen mit anderen Käfigen 3 sind damit weitgehend ausgeschlossen.

Das Computersystem ordnet die ausgelesenen Identifikationsdaten der Behälterkartenetiketten 22 den jeweiligen Datensätzen aus der Datenbank zu. Das Computersystem identifiziert also den Käfig 3a bzw. seinen Inhalt, nämlich die Versuchstiere, auf der linken Position der Arbeitsfläche 10, die Versuchstiere im Käfig 3b in der mittleren Position und den beispielsweise leeren Käfig 3c in der rechten Position der Arbeitsfläche 10. Es erfasst damit eine konkrete Konstellation der Käfige 3a, 3b, 3c. Sobald jetzt eine Behälterkarten 11 eines Käfigs 3 abgenommen und in den Erfassungsbereich des Lesegeräts 17 gelangt, gilt der Käfig 3 als "geöffnet", also als in Bearbeitung.

Da es sich bei dem vorhergehenden, detailliert beschriebenen Untersuchungsbereich einer Tierzuchtanlage um ein Ausführungsbeispiel handelt, kann es in üblicher Weise vom Fachmann in einem weiten Umfang modifiziert werden, ohne den Bereich der Erfindung zu verlassen. So kann die Erfindung auch für die Pflanzenforschung verwendet werden. Insbesondere können beispielsweise die Anzahl an Regalen, an Käfigen in den Regalen und an Wechselstationen und die konkreten Ausgestaltungen der Regale, Wechselstationen, Käfige, Behälterkarten etc. in anderer Form als in der hier beschriebenen erfolgen. Auch können die Aufnahmen der Käfige in den Regalen oder die Arbeitsfläche der Wechselstation in einer anderen Form ausgestaltet werden, wenn dies aus Verwendungs- oder Platzgründen bzw. gestalterischen Gründen notwendig ist. Weiterhin schließt die Verwendung der unbestimmten Artikel "ein" bzw. "eine" nicht aus, dass die betreffenden Merkmale auch mehrmals oder mehrfach vorhanden sein können.

### Bezugszeichenliste

- 3, 3a, 3b, 3c: Käfig
- 6: Bildschirm
- 7: Leseeinrichtung
- 10: Arbeitsfläche
- 11: Behälterkarte
- 16: Regal
- 17: Lesegerät
- 18: Fach
- 19: Aufstellfläche
- 20: Tisch
- 22: Behälterkartenetikett
- 24: Wechselstation
- 26: Tastaturfeld
- 28: Strichcode
- 30: Anzeige
- 32: Mikrosaugnapf-Folie
- 34: NFC-Chip
- 36: QR-Code
- 38: Kaschierfolie

## Patentansprüche

1. System für Tierzucht- oder Pflanzenforschungsanlagen,
- mit einem Regal (16) zur Aufnahme von Behältern (3, 3a, 3b, 3c),
- mit einer Wechselstation (24),
- mit einer Arbeitsfläche (10) der Wechselstation (24) zur Bearbeitung von Objekten in zumindest einem Behälter (3a, 3b, 3c) auf der Arbeitsfläche (10),
- mit einem Lesegerät (17) der Wechselstation (24) für elektronische Behälterkarten (11),
- mit autoklavierbaren Behältern (3, 3a, 3b, 3c) zur Aufnahme von Objekten,
- mit von den Behältern (3, 3a, 3b, 3c) abnehmbaren elektronischen Behälterkarten (11) zur Identifikation der Behälter (3, 3a, 3b, 3c) und zur Darstellung des Behälterinhalts direkt am Behälter (3, 3a, 3b, 3c),
**gekennzeichnet durch** jeweils ein maschinenlesbares, von der Behälterkarte (11) verschiedenes Behälterkartenetikett (22) an den Behältern (3, 3a, 3b, 3c) zur Identifikation des jeweiligen Behälters (3, 3a, 3b, 3c) und
**gekennzeichnet durch** eine von dem Lesegerät (17) verschiedene Leseeinrichtung (7, 8) zum Erfassen der Behälterkartenetiketten (22).

2. System nach Anspruch 1, **gekennzeichnet durch** die Leseeinrichtung (7, 8) in der Wechselstation (24) und/oder im Regal (16).

3. System nach Anspruch 1 oder 2, **gekennzeichnet durch** im Bodenbereich der Behälter (3, 3a, 3b, 3c) angeordnete Behälterkartenetiketten (22) und **gekennzeichnet durch** eine unter der Arbeitsfläche (10) der Wechselstation (24) oder unter der Abstellfläche (19) des Behälters (3, 3a, 3b, 3c) im Regal (16) angeordnete Leseeinrichtung (7, 8).

4. System nach einem der Ansprüche 1 bis 3, **gekennzeichnet durch** gleichlautende Identifikationskennzeichen (28, 36) auf der Behälterkarte (11) und auf dem Behälterkartenetikett (22) desselben Behälters (3, 3a, 3b, 3c).

5. System nach einem der obigen Ansprüche, **gekennzeichnet durch** ein abnehmbares und wiederverwendbares Behälterkartenetikett (22), insbesondere durch ein mittels Microsuction-Folie (32) am Behälter (3, 3a, 3b, 3c) anbringbares und davon abnehmbares Behälterkartenetikett (22).

6. Regal für Tierzucht- oder Pflanzenforschungsanlagen zur Aufnahme von Behältern (3, 3a, 3b, 3c), die mit einer elektronischen Behälterkarte (11) zur Identifikation und Darstellung zumindest des Behälterinhalts ausgestattet sind, **gekennzeichnet durch** eine Leseeinrichtung (8) im Regal (16) zum Erfassen von behälterseitigen Behälterkartenetiketten (22).

7. Wechselstation für Tierzucht- oder Pflanzenforschungsanlagen zur Bearbeitung von Objekten in Behältern (3, 3a, 3b, 3c), die mit einer elektronischen Behälterkarte (11) zur Identifikation und Darstellung zumindest des Behälterinhalts ausgestattet sind, mit einem Lesegerät (17) für die elektronischen Behälterkarten (11), insbesondere nach Anspruch 1 bis 5, **gekennzeichnet durch** eine von dem Lesegerät (11) verschiedene Leseeinrichtung (7) zum Erfassen von behälterseitigen Behälterkartenetiketten (22).

8. Wechselstation nach dem obigen Anspruch, **gekennzeichnet durch** ihre Ausbildung als offene fahrbare Einrichtung oder als stationärer Arbeitstisch (20) oder als Laminar-Flow-Station.

9. Wechselstation nach dem obigen Anspruch 7 oder 8 mit einer Arbeitsfläche (10) zum Abstellen der Behälter (3, 3a, 3b, 3c), **gekennzeichnet durch** ein in die Arbeitsfläche (10) integriertes Eingabemedium (26).

10. Behälter für ein System für Tierzucht- oder Pflanzenforschungsanlagen, insbesondere nach Anspruch 1 bis 5, und/oder zur Verwendung in einem Regal nach Anspruch 6, und/oder zur Verwendung in einer Wechselstation nach einem der obigen Ansprüche 7 bis 9, mit einer elektronischen Behälterkarte (11) zur Identifikation und Darstellung zumindest des Behälterinhalts, **gekennzeichnet durch** ein maschinenlesbares, von der Behälterkarte (11) verschiedenes Behälterkartenetikett (22) zur Identifikation zumindest des Behälters (3, 3a, 3b, 3c), insbesondere in seinem Bodenbereich.

11. Behälter nach dem obigen Anspruch, **gekennzeichnet durch** eine Anbringungsvorrichtung (32) am Behälterkartenetikett (22) zu dessen reversiblen Anbringung am Behälter (3, 3a, 3b, 3c).

12. Satz aus einer Behälterkarte zum Anbringen an einem Behälter und zur Identifikation und Darstellung zumindest eines Behälterinhalts und aus einem wiederverwendbaren Behälterkartenetikett (22) zum Anbringen an einem Behälter (3, 3a, 3b, 3c) zur Identifikation zumindest des zugehörigen Behälters (3, 3a, 3b, 3c), mit gleichlautenden maschinenlesbaren Identifikationskennzeichen (28, 36) auf der Behälterkarte (11) und auf dem Behälterkartenetikett (22), insbesondere für ein System nach einem der obigen Ansprüche 1 bis 5, und/oder zur Verwendung in einem Regal nach Anspruch 6, und/oder zur Verwendung in einer Wechselstation nach einem der obigen Ansprüche 7 bis 9, und/oder zur Anbringung an einem Behälter nach einem der obigen Ansprüche 10 bis 11

13. Satz nach dem obigen Anspruch, **gekennzeichnet durch** eine Ausstattung des Behälterkartenetiketts (22) zum abnehmbaren Befestigen des Behälterkartenetiketts (22), insbesondere mittels Microsuction-Folie (32).

14. Satz nach einem der Ansprüche 12 oder 13, gekennzeichnet ein maschinenlesbares Identifikationskennzeichen des Behälterkartenetiketts (22), insbesondere durch einen RFiD-Chip (34) und/oder durch einen QR-Code (36).

15. Verwendung eines Behälterkartenetiketts (22) mit einem maschinenlesbaren Identifikationskennzeichen (34, 36) in einem System nach einem der obigen Ansprüche 1 bis 5, und/oder zur Verwendung in einem Regal nach Anspruch 6, und/oder zur Verwendung in einer Wechselstation (24) nach einem der obigen Ansprüche 7 bis 9, und/oder zur Anbringung an einem Behälter (3, 3a, 3b, 3c) nach einem der obigen Ansprüche 10 bis 11.
